# NEUE EUROPÄISCHE PATENTSCHRIFT

(11) **EP 0 300 317 B2**
(45) Veröffentlichungstag und Bekanntmachung des Hinweises auf die Entscheidung über den Einspruch: **04.02.1998**
(45) Hinweis auf die Patenterteilung: 27.12.1991
(21) Anmeldenummer: 88111064.7
(22) Anmeldetag: 11.07.1988
(51) Int. Cl.: A61C 3/04, B23Q 3/00

(54) **Einrichtung für in zahnärztliche Behandlungsinstrumente einsetzbare Werkzeuge**
System for recognising dental instrument tool heads
Système de reconnaissance pour des outils utilisables dans les instruments de soins dentaires

(30) Priorität: 24.07.1987 DE 3724586; 22.04.1988 DE 3813714
(43) Veröffentlichungstag der Anmeldung: 25.01.1989
(73) Patentinhaber: SIEMENS AKTIENGESELLSCHAFT, 80333 München (DE)
(72) Erfinder: Liefke, Johannes, D-6140 Benheim 6 (DE); Nickel, Bernd, D-6143 Lorsch (DE); Pabst, Josef, D-6805 Heddesheim (DE); Fleer, Otto, D-6140 Bensheim 3 (DE)

(56) Entgegenhaltungen:
- EP-A- 0 094 105
- DD-C- 212 182
- DE-A- 938 577
- DE-A- 2 914 045
- DE-A- 3 302 389
- DE-C- 2 844 348
- FR-A- 2 453 450
- GB-A- 1 419 622
- US-A- 3 103 006
- US-A- 3 366 248
- WERKSTATT UND BETRIEB, Band 119, Nr. 7, Juli 1986, Seiten 607-609, Carl Hanser Verlag, München, DE; E.W. SCHMIDT: "Werkzeug-Kodierung und Datenverwaltung beim Block-Tool-System"

## Beschreibung

Die Erfindung betrifft ein Einrichtung (Erkennungssystem) für ein zahnärztliches Werkzeug, welches aus einer Reihe von vielen, vorzugsweise in Ablageplätzen gehalterten und dort entnehmbaren Werkzeugen in ein Behandlungsinstrument einsetzbar ist.

Es kann davon ausgegangen werden, daß dem Zahnarzt heute etwa 500 verschiedene Bohr- oder Fräswerkzeuge für den normalen Anwendungsfall, d.h. für die üblichen Bohr-, Schleif- und Fräsarbeiten, und darüber hinaus noch eine weitere Anzahl spezieller Werkzeuge für Sonderbehandlungen bzw. in Sondergrößen zur Verfügung stehen.

Jedem Werkzeug kann an sich aufgrund seiner Zerspanungscharakteristik eine optimale Drehzahl bzw. ein optimaler Drehzahlbereich zugeordnet werden. Zum Teil sind in den Katalogen der Werkzeughersteller bereits Empfehlungen für einen bestimmten Drehzahlbereich angegeben. Für den Einsatz der Werkzeuge stehen dem Benutzer Antriebssysteme zur Verfügung, mit denen er durch Wahl verschiedener Behandlungsinstrumente mit verschiedenen Über- und Untersetzungen und durch Einstellen der geeigneten Antriebsdrehzahl am Antriebsmotor die jeweils günstige Drehzahl für das betreffende Werkzeug vorwählen kann. Die Behandlungsinstrumente können sowohl komplette sogenannte Hand- und Winkelstücke sein als auch Behandlungsköpfe, die auf einen verlängerten Antriebsteil aufgesetzt werden.

Eine Hilfestellung bei der Wahl der einem Werkzeug zugeordneten Drehzahl ist bei den aus dem Stand der Technik (DE-A-28 44 348 und DE-A-29 14 045) bekannten Einrichtungen dadurch gegeben, daß die Werkzeuge und die Behandlungsköpfe in denen sie gehaltert werden, in speziell ausgebildeten Aufnahmeplätzen angeordnet sind. Bei Entnahme eines Werkzeuges wird eine für dieses Werkzeug spezifische Werkzeugadresse an eine zentrale Steuereinrichtung übermittelt, die bestimmte, dem Werkzeug zugeordnete Betriebsparameter, wie Drehzahl, Schnittgeschwindigkeit, etc. bereitstellt und an einem Display anzeigt.

Die bekannten Einrichtungen haben den Nachteil, daß für sämtliche Werkzeuge entsprechend ausgebildete Aufnahmeplätze vorgesehen sein müssen, wodurch die Gesamteinrichtung vergleichsweise aufwendig wird. Ein weiterer wesentlicher Nachteil ist darin zu sehen, daß eine möglicherweise falsche Bestückung der Werkzeugaufnahmeplätze zu einer falschen Adressierung und damit zu falschen Einstellwerten führen kann.

Der im Anspruch 1 angegebenen Erfindung liegt die Aufgabe zugrunde, demgegenüber eine Verbesserung zu schaffen, insbesondere mit dem Ziel, eine fehlerhafte Zuordnung solcher Betriebsparameter zu vermeiden.

Gemäß der Erfindung sind die Werkzeuge mit Codierungsmitteln, vorzugsweise in Form von Strichmarkierungen, versehen welche verschiedenen Drehzahlen oder Drehzahlabstufungen zugeordnet sind. Den Werkzeugen ist ferner eine auf die Codierungsmittel abgestimmte Ausleseeinrichtung zugeordnet, die einer Auswertelogik Kennsignale entsprechend der auf dem Werkzeug aufgebrachten Codierung zuführt. Die aus der Codierung der Werkzeuge gewonnenen Kennsignale können in Anzeigesignale für den vorzusehenden Antriebsmotor, für auf den Antriebsmotor aufzusetzende Behandlungsköpfe und Getriebehülsen und/oder, alternativ, in Steuersignale für den das Werkzeug antreibenden Antriebsmotor umgesetzt werden. Vorteilhafterweise ist ein Display mit Symboldarstellung für verschiedene Behandlungsinstrumente vorgesehen, wobei entsprechend der Codierung des gewählten Werkzeuges das zugehörige Behandlungsinstrument optisch angezeigt wird. Dem Benutzer kann so bei Benutzung eines beliebigen, mit Codierungsmitteln versehenen Werkzeuges, das diesem gewählten Werkzeug zugehörige Behandlungsinstrument angezeigt werden. Anstelle der Symbol-, also bildlichen Darstellung, kann auch eine Textanzeige oder eine Anzeige per Sprachausgabe vorgesehen sein.

Wie eingangs bereits erwähnt, kann das Behandlungsinstrument ein Behandlungskopf sein, der das anzutreibende Werkzeug direkt aufnimmt; es kann ebenso auch eine zwischen Behandlungskopf- und Antriebsmotor angeordnete Getriebehülse sein, die, um eine Unter- bzw. Übersetzung der Motorantriebsdrehzahl zu erreichen, mit unterschiedlichen Getriebeabstufungen ausgestattet ist.

Die Codierung auf den Werkzeugen ist vorteilhafterweise nach dem Binär-Code-System aufgebaut. Zur Abtastung der Code-Informationen, die vorteilhafterweise in Form von Strichmarkierungen auf dem Werkzeug aufgebracht sind, können ein oder mehrere Sensorelemente, vorzugsweise optoelektronische Sensorelemente vorgesehen sein. Die Strichmarkierungen können sowohl längs, also parallel zur Werkzeugschaftachse` als auch quer in Form von Markierungsringen auf dem Werkzeug aufgebracht werden. Ebenso denkbar sind Markierungen an der der Werkzeugspitze abgewandten Seite des Werkzeuges. Die Werkzeugdrehzahlen sind innerhalb frei wählbarer minimaler und maximaler Drehzahlen in mehreren Stufen unterteilt. Die Abtastung der Strichmarkierungen ist vorteilhafterweise so ausgebildet, daß bei Vorhandensein einer Markierung diese Stelle im Abtastsystem einer 1 im Binär-Codesystem entspricht. Dies hat den Vorteil, daß bei einer fehlerhaften Auslesung automatisch ein niedrigerer Drehzahlbereich bzw. eine niedrigere Drehzahl eingestellt wird. Das Auslesen bzw. Erfassen der Markierungen kann auf optoelektronischem Wege oder auf magnetischem Wege erfolgen. Die Ausleseeinrichtung selbst ist vorteilhafterweise nur einem der Ablageplätze für die Werkzeuge zugeordnet; sie kann aber auch, sofern es die baulichen Verhältnisse zulassen, direkt dem vorzusehenden Behandlungsinstrument zugeordnet sein. Im letzteren Falle wäre z.B. die das Werkzeug aufnehmende Spannzange des Behandlungskopfes mit einer Ausleseeinrichtung versehen, deren Signale über gesonderte Leitungen im Handstück oder mit Hilfe anderer Übertragungsmittel z.B. mit Hilfe von Infrarotstrahlen zu der geräteseitig angeordneten Auswertelogik und Anzeigeeinheit geführt werden.

Gemäß einer besonders vorteilhaften Weiterbildung der Erfindung wird vorgeschlagen, im Bereich der Werkzeugaufnahmehülse (Spannzange bzw. Werkzeugantriebswelle) zweite Codierungsmittel vorzusehen, deren Kennsignale über eine zweite Ausleseeinrichtung zu einem Soll-/Istwert-Vergleich herangezogen werden. Der Sollwert wird dabei gebildet durch die Kennsignale aus der Werkzeugcodierung. Bei dem Soll-/ Istwertvergleich wird der Antriebsmotor eingeschaltet und in seiner Drehzahl so weit gesteigert, bis Soll- und Istwerte übereinstimmen.

Dieser so ermittelte Wert kann abgespeichert werden; er dient bei weiterer Benutzung des Antriebs zur Einstellung der Motordrehzahl und damit der Begrenzung der max. möglichen Drehzahl des Bohrinstruments.

Die zweiten Codierungsmittel können magnetischer oder optischer Art sein. Vorteilhafterweise kann das Wellenende bzw. die Spannzange, in die der Werkzeugschaft eingesetzt wird, quermagnetisiert oder am stirnseitigen Ende mit optischen Markierungen versehen sein.

Es können sowohl ein als auch mehrere Markierungen stirnseitig oder am Umfang der Welle bzw. der Spannzange angeordnet sein, wodurch sich Informationen über die Drehzahl oder ein Vielfaches der Drehzahl ergeben. Die Markierungen können vorteilhafterweise selbst wieder "codiert" sein, z.B. in Form von asymmetrisch angeordneten Markierungen, um sie so, nur mit speziellen Ausleseeinrichtungen abtasten zu können. Die zweite Ausleseeinrichtung kann vorteilhafterweise mit in das Gehäuse der ersten Ausleseeinrichtung integriert werden.

Die vorgenannten Weiterbildungen der Erfindung haben u.a. den Vorteil, daß es gleichgültig ist, ob der jeweils angezeigte Behandlungskopf und die Getriebehülse auch wirklich vom Arzt verwendet wird.

Weitere vorteilhafte Ausgestaltungen und Weiterbildungen der Erfindung sind aus den Unteransprüchen und der nachstehenden Beschreibung mehrerer Ausführungsbeispiele der Erfindung zu entnehmen. Es zeigen:
Fig. 1 ein zahnärztliches Antriebssystem mit mehreren Behandlungsinstrumenten in vereinfachter Darstellung,
Fig. 2 eine Einrichtung mit verschiedenen Werkzeugaufnahmeplätzen und einer Anzeigeeinheit,
Fig. 3 eine vereinfachte Darstellung einer Ausleseeinrichtung zur Signalerfassung`
Fig. 4 verschiedene, mit unterschiedlichen Codierungen versehene Werkzeuge,
Fig. 5 eine Übersicht über die den Werkzeugen zugeordneten Drehzahlen entsprechend der in Fig. 4 vorgesehenen Codierung,
Fig. 6 eine weitere Ausführungsform einer Codierung der Werkzeuge und Anordnung einer Ausleseeinrichtung,
Fig. 7 eine modifizierte Ausführung der Einrichtung nach Fig. 2,
Fig. 8 eine Darstellung des in Fig. 7 gezeigten Instrumentenkopf-Aufnahmeplatzes mit einer zweiten Ausleseeinrichtung im Längsschnitt`
Fig. 9 ein Blockschaltbild für die zweite Ausleseeinrichtung,
Fig. 10 ein Blockschaltbild für erste und zweite Ausleseeinrichtung,
Fig. 11 bis 14 eine weitere Ausführungsform einer Ausleseeinrichtung mit Varianten zur Signalgebung.

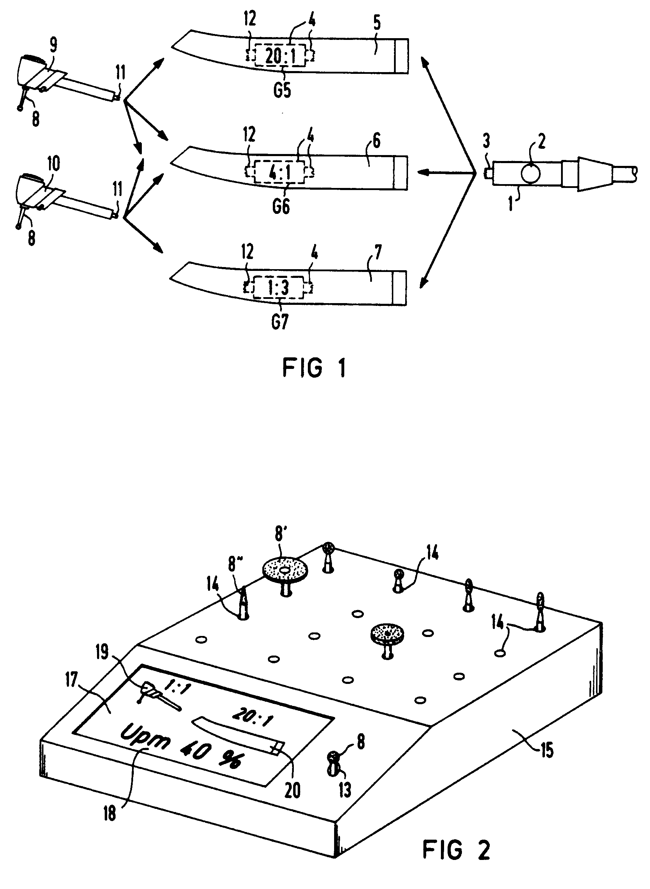

Die Fig. 1 zeigt in einer stark vereinfachten Darstellung ein zahnärztliches Bohrerantriebssystem, enthaltend eine Antriebseinheit 1, welche einen Antriebsmotor 2 (Elektro- oder Luftmotor) enthält, dessen Antriebswelle 3 mit dem Triebwellenende 4 einer von mehreren Getriebehülsen 5, 6, 7 gekoppelt werden kann. Die Getriebehülsen 5, 6, 7 sind äußerlich gleich ausgebildet; sie unterscheiden sich lediglich in ihrem Inneren durch unterschiedlich ausgebildete Getriebepatronen. So weist z.B. die Getriebepatrone G5 der Getriebehülse 5 eine Getriebeabstufung im Verhältnis 20:1 auf, während die Getriebepatrone G6 eine Getriebeabstufung von nur 4:1 und die Getriebepatrone G7 der Getriebehülse 7 eine Getriebeabstufung im Verhältnis 1:3, also eine Untersetzung, aufweisen.

Auf die Getriebehülsen 5, 6 und 7 kann alternativ ein in bekannter Weise ein Werkzeug 8 aufnehmender Behandlungskopf 9 oder 10 aufgesetzt werden. Die Behandlungsköpfe 9 und 10 haben ebenfalls unterschiedliche Getriebeabstufungen. So kann der Behandlungskopf 9 beispielsweise ein Getriebe mit direkter Drehzahlübertragung, also ein Übersetzungsverhältnis 1:1 aufweisen, während der Behandlungskopf 10 ein Untersetzungsgetriebe von 1:3 aufweisen kann. Die Behandlungsköpfe 9, 10 können wahlfrei an die Getriebehülsen 5, 6 oder 7 aufgesetzt werden, wodurch sich je nach Kombination ein unterschiedliches Gesamtunter- oder Gesamtübersetzungsverhältnis erzielen läßt. Im gekoppelten Zustand der Teile stehen die mit 11 bezeichneten Triebwellenenden der Behandlungsköpfe 9 oder 10 mit den anderen Triebwellenenden 12 der Getriebehülsen 5, 6 oder 7 in Eingriff.

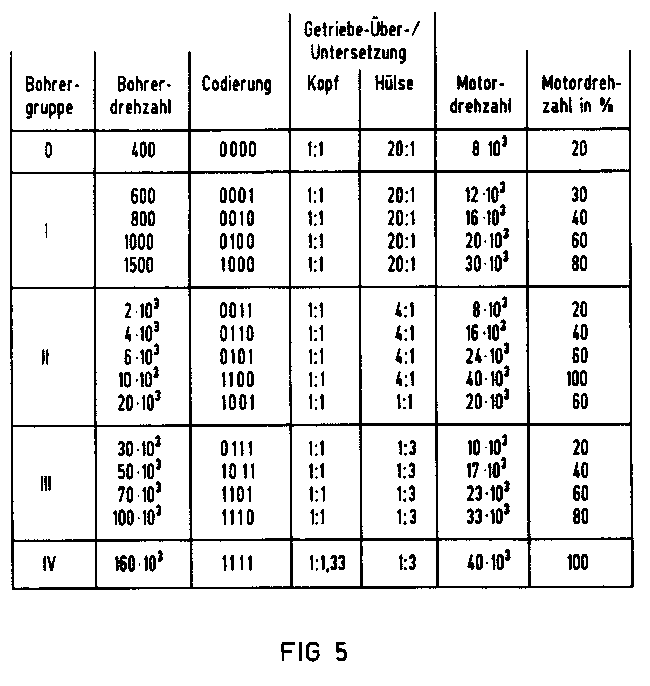

Im folgenden wird davon ausgegangen, daß der Antriebsmotor 2 in einem Bereich zwischen 8.000 upm und 40.000 upm geregelt werden kann. Je nachdem, welche Getriebehülse auf die Antriebseinheit 1 aufgesteckt und welcher Behandlungskopf darauf aufgesetzt wird, läßt sich eine Werkzeugdrehzahl zwischen 400 upm und 160.000 upm erzielen. Eine entsprechende Übersicht über diesen Drehzahlbereich zeigt Fig. 5.

Das Werkzeug 8 ist bei Nichtgebrauch zusammen mit anderen, mit 8', 8'' .. bezeichneten Werkzeugen, die hinsichtlich des Bearbeitungsteiles unterschiedlich (als Bohr- oder Schleifwerkzeuge), hinsichtlich des Aufnahmeschaftes jedoch gleich ausgebildet sind, in Aufnahmeplätzen 13 und 14 gehaltert. Die Aufnahmeplätze 14 können im einfachsten Falle aus dem Werkzeugschaft entsprechenden Vertiefungen bestehen, in die die Werkzeuge willkürlich ablegbar sind. Die Aufnahmeplätze 14 können Bestandteil eines Gehäuseunits 15 sein; sie können auch in räumlich getrennten Behältnissen aufbewahrt und auf andere Art und Weise bereitgestellt sein.

Im Gegensatz zu den Aufnahmeplätzen 14, die außer der Halte-und Bereitstellungsfunktion keine weitere Funktion ausüben, ist der Aufnahmeplatz 13 ein spezieller Einzelwerkzeugaufnahmeplatz, in dem ein beliebiges aus den Aufnahmeplätzen 14 entnehmbares Werkzeug zur Erkennung der dem Werkzeug zugeordneten Betriebsparameter eingesetzt werden kann.

Das Gehäuseunit 15 ist ferner noch mit einem Anzeigedisplay 17 versehen, auf dem neben einer Anzeige 18 der Drehzahl des Antriebsmotors, welche vorteilhafterweise digital und in Prozent angezeigt wird, zwei weitere bildliche Darstellungen 19 und 20 für einerseits die Behandlungsköpfe 9 und 10 und andererseits der Getriebehülsen 5 bis 7 vorhanden sind.

Entsprechend einem in den Einzelwerkzeugaufnahmeplatz 13 eingesteckten Werkzeug (8, 8', 8'' ..) werden am Display 17 einerseits die diesem Werkzeug zugeordnete Motordrehzahl in Prozent (Pos. 18 in Fig. 2), andererseits die für dieses ausgewählte Werkzeug optimal passenden bzw. darauf abgestimmten Getriebehülsen und zugehörige Behandlungsköpfe optisch angezeigt. Der Benutzer hat also nach Einsetzen eines beliebig wählbaren Werkzeuges sofort die Information, welche der drei Getriebehülsen 5 bis 7 und zwei Behandlungsköpfe 9 und 10 er bei Benutzung dieses Werkzeuges vorzusehen hat; im gezeigten Ausführungsbeispiel für den Bohrer 8 also die Getriebehülse 5 mit dem Übersetzungsverhältnis 20:1 und dem Behandlungskopf 9 mit der Direktübersetzung 1:1.

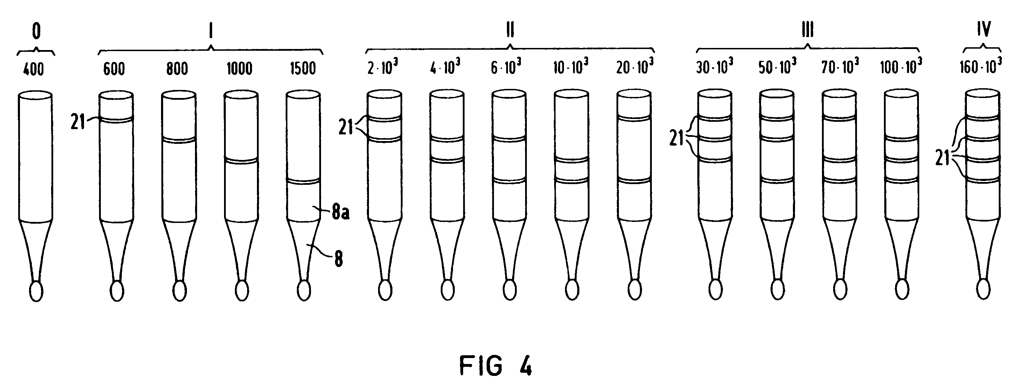

Davon ausgehend, daß jedem Werkzeug eine bestimmte Drehzahl bzw. ein bestimmter Drehzahlbereich zugeordnet werden kann, läßt sich, wie in den Übersichten nach Fig.4 und 5 aufgezeigt der gesamte Werkzeug-Drehzahlbereich von 400 upm bis 16.000 upm auf beispielsweise 5 Werkzeuggruppen (0 bis IV) aufteilen. Die Gruppe 0 beinhaltet Werkzeuge, die beispielsweise nur für Drehzahlen bis 400 upm geeignet sind, die Gruppe I Werkzeuge, die für Drehzahlen der Abstufungen 600, 800, 1.000 und 1.500 upm in Frage kommen, die Gruppe II Werkzeuge mit den Drehzahlen zwischen 2.000 und 20.000, die Gruppe III Werkzeuge, die für Drehzahlen zwischen 30.000 upm und 100.000 upm zu betreiben sind, und die Gruppe IV schließlich Werkzeuge, die mit der maximalen Drehzahl von 160.000 upm oder darüber zu betreiben sind. Diese Unterteilung ist an sich beliebig wählbar; im vorliegenden Ausführungsbeispiel ist man davon ausgegangen, daß die Werkzeuge der Gruppe 0 keine Codierung aufweisen, die Werkzeuge der Gruppe I bis VI dagegen mit einer Codierung versehen sind. Eine solche Unterteilung hat den Vorteil, daß bereits auf dem Markt befindliche Werkzeuge, die keinerlei Codierung aufweisen, aus Sicherheitsgründen stets mit der niedrigsten Drehzahl betrieben werden.

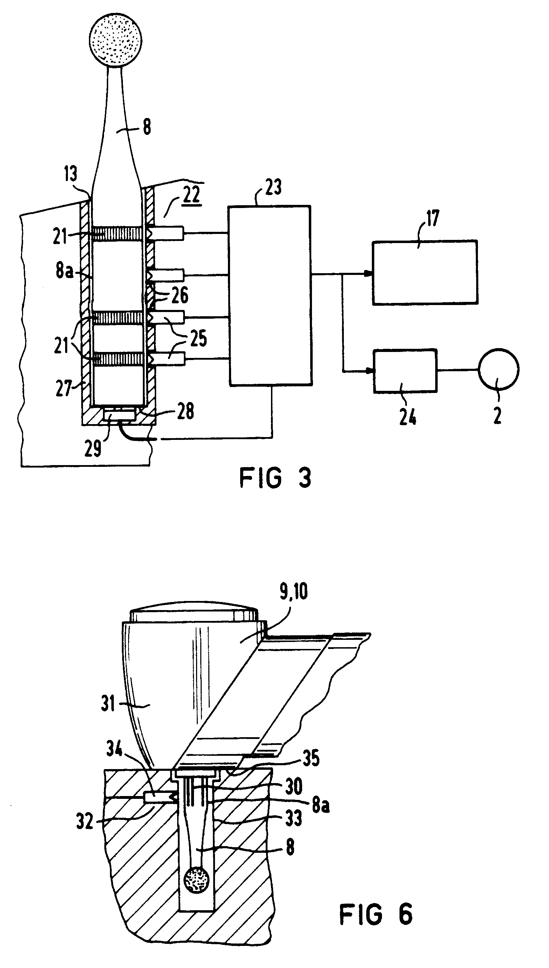

Die Codierung erfolgt nach dem Prinzip des Binär-Codes mit Ja/Nein-Informationen und vorteilhafterweise in Form von Strichmarkierungen 21, die quer zur Bohrerlängsachse auf dem Schaft 8a des Werkzeuges aufgebracht sind (Fig. 3 und 4). Bei den Werkzeugen der Gruppe I ist jeweils eine Markierung, bei der Gruppe II sind jeweils zwei, bei der Gruppe III jeweils drei und bei der Gruppe IV jeweils vier Markierungsstriche auf den Werkzeugen aufgebracht. Eine solche Ringcodierung erfolgt zweckmäßigerweise durch Ätzen oder Einbrennen mittels Laser auf den Werkzeugschaft 8a. Obgleich eine andere Codierung z.B. in Form von Magnetstreifen oder dergleichen denkbar ist, hat eine optisch erkennbare Markierung den Vorteil, daß der Benutzer bereits beim Entnehmen des Werkzeuges eine gewisse Vorinformation über die Arbeitsdrehzahl, mit der er das Werkzeug zu betreiben hat, erhält. Wie aus der Darstellung nach Fig. 4 ersichtlich, sind die Markierungen 21 im gleichen Abstand auf dem Werkzeugschatt verteilt angeordnet. Die optisch erkennbaren Striche entsprechen vorteilhafterweise im Binär-Code-System der "1", während die dazwischen befindlichen Leerfelder der "0" Information entsprechen. Eine solche Anordnung hat den Vorteil, daß bei einer fehlerhaften Auslesung automatisch immer die nächst niedriger liegende Drehzahl bzw. der nächst niedriger liegende Drehzahlbereich angezeigt bzw. eingestellt wird.

Die auf den Werkzeugschaft aufgebrachte Codierung wird mit Hilfe einer Ausleseeinrichtung 22 erfaßt und die daraus erhaltenen Informationen einer Auswertelogik 23 zugeführt, welche die aus den Kennsignalen gewonnenen Informationen im Display 17 anzeigt und/oder einer Steuereinrichtung 24 zuführt, mit deren Hilfe der Antriebsmotor 2 gesteuert wird.

Die Ausleseeinrichtung 22 enthält im vorliegenden Ausführungsbeispiel vier optoelektronische Sensorelemente 25 in Form von fokussierten Reflex-Lichtschranken (Strichcodeleser), die in Ausnehmungen 26 einer Aufnahmehülse 27 des Einzelwerkzeugaufnahmeplatzes 13 übereinander angeordnet sind. Die Anordnung ist dabei so getroffen, daß bei in der Aufnahmehülse 27 bis gegen einen Anschlag 28 eingesetzten Werkzeugschaft die optoelektronischen Sensorelemente 25 mit denjenigen Stellen am Werkzeugschaft korrespondieren, an denen Strichmarkierungen sind bzw. nach dem Schema entsprechend Fig. 4 sein können. Um eine genau definierte Ausgangsposition zu erhalten, ist bodenseitig der Aufnahmehülse 27 im Bereich des Anschlages 28 ein Mikroschalter 29 vorgesehen, der bei Ansprechen ein entsprechendes Signal an die Auswertelogik 22 gibt und die Ausleseeinrichtung einschaltet.

Die aus den Strichinformationen über die Sensorelemente gewonnenen Signale, im vorliegenden Ausführungsbeispiel nach Fig. 3, also die Signale 1011, werden in der Auswertelogik 23 entsprechend dem Schema nach Fig. 5 verarbeitet, d.h. bei der vorliegenden Information 1011 wird auf dem Anzeigedisplay 17 angezeigt, daß der Behandlungskopf 9 mit der Direktübersetzung 1:1 und die Getriebehülse 7 mit der Untersetzung von 1:3 vorzusehen ist, wodurch bei einer Motordrehzahl von 17.000 upm eine Werkzeugdrehzahl von 50.000 upm erzielt wird. Die Motordrehzahl von 17.000 upm wird dabei nicht direkt, sondern in Prozent angezeigt, im angesprochenen Ausführungsbeispiel also mit 40 %.

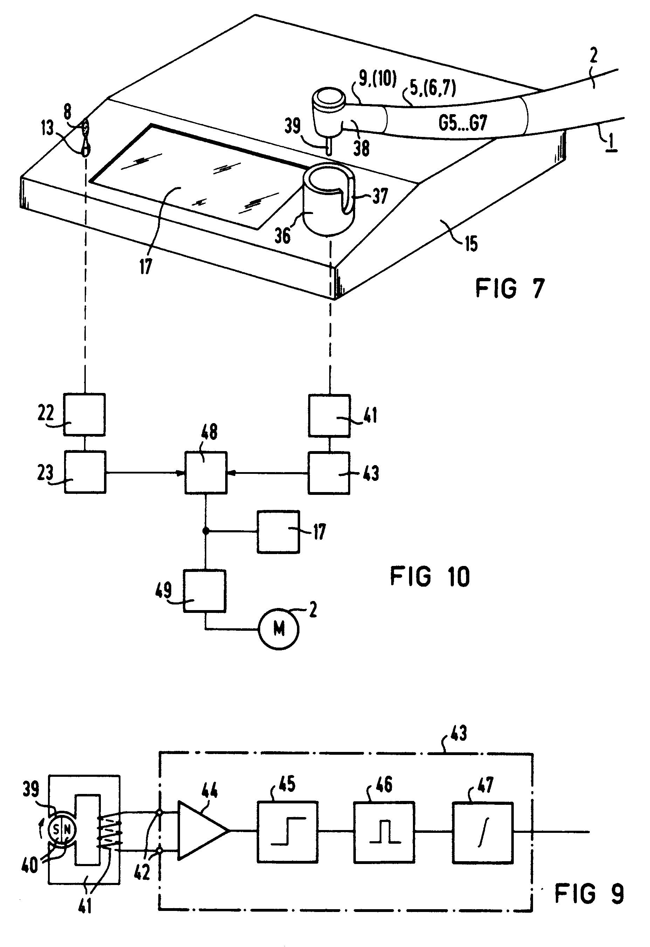

Im Rahmen der Erfindung liegt es, anstelle der in Fig. 3 gezeigten vier Sensorelemente nur ein einziges Sensorelement vorzusehen und die Auslesung dann entsprechend anders zu gestalten. Unter Beibehaltung der erläuterten Ringcodierung wäre es denkbar, das (einzige) Sensorelement im oberen Bereich der Aufnahmehülse 27 anzuordnen und die Auslesung der Codierung seriell beim Einsetzen des Werkzeugschaftes bis zum definierten Anschlag 28 durchzuführen. Die Anordnung mit nur einem Sensorelement läßt sich mit Vorteil auch bei einer Anordnung vorsehen, wie sie in Fig. 6 schematisch aufgezeigt ist. Das Werkzeug ist dort am Bohrerschaff 8a mit einer aus längs, also parallel zur Werkzeugachse verlaufenden Strichmarkierung 30 versehen, die bei im Behandlungskopf 9, 10 eingesetztem Werkzeug aus dem mit 31 bezeichneten Kopfgehäuse so weit vorsteht, daß sie noch mit einer mit 22 bezeichneten Ausleseeinrichtung erfaßt werden kann. Diese Ausleseeinrichtung kann wiederum Bestandteil eines Einzelwerkzeug-Aufnahmeplatzes 33 sein, der ähnlich in Fig. 3 gezeigt, aufgebaut ist, jedoch im oberen Bereich nur einziges optoelektronisches Sensorelement 34 enthält. Dieses Sensorelement ist im Aufnahmeplatz 33 so angeordnet, daß bei einem Aufsetzen des Behandlungsinstruments auf den Aufnahmeplatz 33 die Codiermittel 30 oder zumindest ein Teil davon mit dem optoelektronischen Sensorelement 33 korrespondieren. Durch Drehen entweder des aufgesetzten Behandlungskopfes oder des Werkzeugaufnahmeplatzes kann eine Auslesung der Codeinformation erfolgen. Auch hier sorgt ein definierter Anschlag 35 (Auflage des Kopfgehäuses 31 an Oberseite des Aufnahmeplatzes 33) dafür, daß die Strichmarkierungen bei aufgesetztem Behandlungsinstrument dem Sensorelement korrespodierend gegenüberstehen.

Entsprechend einer etwas vereinfachten Ausführung kann anstelle der Symboldarstellung, wie in Fig. 2 gezeigt, auch eine Textdarstellung der vorzusehenden Behandlungsköpfe bzw. Getriebehülsen vorgesehen werden. Auch eine Information mit Hilfe einer Sprachausgabe ist denkbar und liegt im Rahmen der Erfindung.

Anhand der Fig. 7 bis 14 wird eine vorteilhafte Weiterbildung der Erfindung beschrieben.

Während die bisher beschriebene Ausführungsform voraussetzt, daß der jeweils angezeigte Behandlungskopf bzw. die Getriebehülse auch wirklich vom Benutzer verwendet wird, erlaubt es die nachfolgend beschriebene Modifikation, die Antriebsdrehzahl direkt in Abhängigkeit vom verwendeten Werkzeug zu steuern bzw. zu begrenzen, unabhängig davon, welche Getriebekombination durch den verwendeten Behandlungskopf und die Getriebehülse zur Anwendung kommt.

Die Fig. 7 zeigt eine modifizierte Ausführungsform von der Einrichtung, wie sie in Fig. 2 aufgezeigt ist. Zusätzlich zu den dem EinzelwerkzeugAufnahmeplatz 13, in den das vorzusehende Werkzeug 8 eingesetzt wird, enthält die Einrichtung 15 einen Behandlungskopf-Aufnahmeplatz 36, der so ausgebildet ist, daß der Behandlungskopf 9, 10 in definierter Position aufgesetzt werden kann. Zu diesem Zweck ist der im wesentlichen zylindrisch ausgebildete Aufnahmeplatz einseitig mit einer Aussparung 37 versehen, welche dafür sorgt, daß im aufgesetzten Zustand das Halsteil 38 des Behandlungskopfes 9 bzw. 10 in definierter Position fixiert ist. Mit 39 ist ein zylindrischer Stift bezeichnet, der zunächst anstelle des Werkzeuges 8 in den Behandlungskopf, d.h. in die dort vorgesehene Aufnahmehülse (Spannzange der Werkzeugantriebswelle) eingesetzt wird und mit dessen Hilfe, wie nachfolgend noch näher erläutert, weitere Kennsignale gewonnen werden.

Der Behandlungskopf-Aufnahmeplatz 36 ist als Meßkopf zu bezeichnen und dient dazu, die Drehzahl an der Werkzeugaufnahmestelle zu erfassen. Fig. 8 zeigt diesen Meßplatz im Schnitt bei eingeführtem Behandlungskopf. Der Stift 39 ist quermagnetisiert; die Magnetisierung bildet zweite Codiermittel 40, die mit einer als Ausleseeinrichtung dienenden Spulenanordnung 41 zusammenwirken, welche im Bereich des Magnetstiftes 39 angeordnet ist. Bei Drehung des quermagnetisierten Stiftes 39 werden infolge elektromagnetischer Induktion in bekannter Weise sinusförmige Spannungen erzeugt, die an den Klemmen 42 abgegriffen und einer Auswerteeinrichtung 43 entsprechend dem Blockschaltbild nach Fig. 9 zugeführt werden. Die Auswerteeinrichtung 43, die einen Verstärker 44, einen Schwellwertschalter 45, einen monostabilen Multivibrator 46 und einen Integrator 47 enthält, wandelt diese Spannungen in gleichförmige, der Anzahl der Umdrehungen des Magnetstiftes 39 entsprechende Impulse um. Diese Impulse werden, wie das Blockschaltbild nach Fig. 10 zeigt, als Istwert einem Vergleicher 48 zugeführt, in den die Impulse aus der Auswertelogik in Form von Sollwerten eingegeben werden.

Der quermagnetisierte Stift 39 stellt somit zweite Codierungsmittel dar, die über die Spulenanordnung, welche als zweite Ausleseeinrichtung anzusehen ist, Kennsignale entsprechend seiner Umdrehung bilden, welche anschließend zu einem Soll-/Istwertvergleich herangezogen werden. Wie aus Fig. 10 in Verbindung mit Fig. 7 erkennbar ist, wird bei diesem Soll-/Istwertvergleich der Sollwert gebildet durch die Kennsignale aus der Werkzeugcodierung, z.B. über die Ausleseeinrichtung 22 und der nachgeschalteten Auswertelogik 23.
Die Funktionsweise ist folgende:

Das Instrument 1, welches den Antriebsmotor 2, eine Griffhülse (Pos. 5 bis 7) mit einer beliebigen Getriebekombination (G5 bis G7) sowie einen Behandlungskopf 9 oder 10 mit ebenfalls beliebiger Getriebeüber- oder -untersetzung enthält, wird zunächst anstelle des später vorzusehenden Werkzeuges (8) mit dem quermagnetisierten Magnetstift 39 versehen und sodann in den Behandlungskopf-Aufnahmeplatz 36 eingeführt (Fig. 8). In den Einzelwerkzeug-Aufnahmeplatz 13 wird das Werkzeug 8, mit dem später gearbeitet werden soll, ebenfalls eingeführt. Für einen Soll-/ Istwertvergleich wird der Antriebsmotor 2 eingeschaltet und sodann in seiner Drehzahl so weit gesteigert bis Soll- und Istwerte übereinstimmen.

Werden dem Vergleicher 48 beispielsweise Kennsignale aufgrund der Codierung des Werkzeüges 8 zugeführt, die einer Soll-Drehzahl von beispielsweise 100.000 upm entsprechen, so wird der Antriebsmotor so weit hochgefahren, bis die Drehzahl am Magnetisierungsstift 39 dieser Soll-Drehzahl entspricht. Stimmen Soll- und Istwerte überein, so wird dieser Wert in einem Speicher 49 abgespeichert. Dieser Speicherwert dient dann bei weiterer Benutzung des Antriebs, wenn also das Werkzeug 8 anstelle des Magnetisierungsstiftes 39 in den Behandlungskopf eingeführt ist, zur Einstellung der Motordrehzahl und damit zur Begrenzung der maximal möglichen Drehzahl des Werkzeuges.

Durch den Soll-/Istvergleich ist sichergestellt, daß ein entnommenes Werkzeug nie mit einer unzulässig hohen Drehzahl gefahren wird, daß also eine Begrenzung der Drehzahl in Abhängigkeit vom verwendeten Werkzeug gegeben ist. Wird beispielsweise ein Werkzeug mit sehr niedriger Drehzahl und eine instrumentenseitige Getriebekombination für sehr hohe Drehzahlen ausgewählt, so wird diese Getriebekombination nicht voll ausgenutzt, sondern in der Drehzahl auf die dem Werkzeug zugeordnete Drehzahl begrenzt. Umgekehrt, wenn ein Werkzeug mit sehr hoher Drehzahl und eine Getriebekombination für niedertourige Werkzeuge vorgesehen sind, erreicht der Istwert nicht den vorgegebenen Sollwert. In diesem Falle kann eine entsprechende Anzeige auf dem Display 17 (Blinken, Warnton etc.) den Benutzer auf eine zwar für das Werkzeug ungefährliche, jedoch unzweckmäßige Getriebekombination im Behandlungsinstrument hingewiesen werden.

Denkbar und im Rahmen der erfindungsgemäßen Weiterbildung liegt es auch, anstelle des quermagnetisierten Stiftes 39 die Hohlwelle 50 oder eine in die Hohlwelle eingesetzte Spannzange mit entsprechenden magnetischen Codierungsmitteln, z.B. in Form der erläuterten Quermagnetisierung, zu versehen. Versuche haben gezeigt, daß bereits dann, wenn die dem Werkzeug zugewandte Stirnseite des Behandlungskopfes in Nähe der Magnetspulenanordnung 40 gebracht wird, bereits Kennsignale gewonnen werden können.

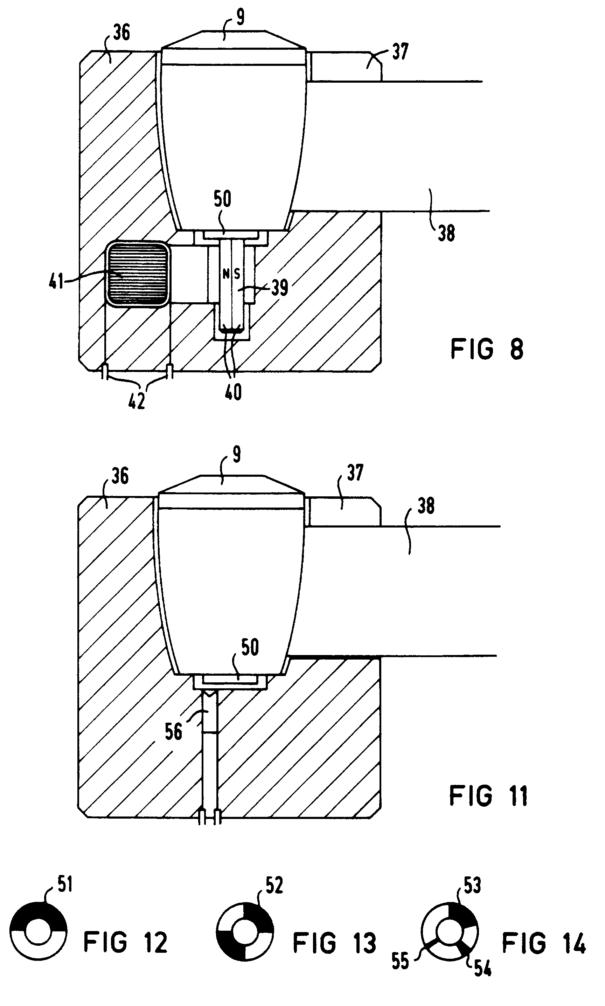

Anstelle der vorbeschriebenen magnetischen Codierungsmittel sind auch optische Codierungsmittel denkbar. Eine solche Variante zeigen Fig. 11 und 12. Die Hohlwelle 50 enthält stirnseitig am Umfang der Welle ein oder mehrere Markierungen 51 bis 55, welche durch ein optisches Sensorelement 56, welches benachbart der Stirnseite der Hohlwelle 50 im Behandlungskopf-Aufnahmeplatz 36 an geeigneter Stelle angeordnet ist, ausgelesen werden können. Die Markierungen 51 bis 55 können entweder, wie in Fig. 12 und 13 gezeigt, symmetrisch oder, wie in Fig. 14 gezeigt, asymmetrisch angeordnet sein. Während die Markierung, entsprechend Fig. 12, einen Impuls pro Umdrehung der Hohlwelle liefert, liefert die Codierung entsprechend Fig. 13 Informationen über ein Vielfaches der Drehzahl. Eine asymmetrische Codierung entsprechend Fig. 14 hat den Vorteil, daß die Markierung selbst wiederum "codiert" ist, so daß sie nur mit speziellen Ausleseeinrichtungen abgetastet werden können.

Die Verarbeitung der Informationen erfolgt sinngemäß, wie bei der magnetischen Version beschrieben.

Abschließend sei darauf hingewiesen, daß es nicht zwingend notwendig ist, den Behandlungskopf-Aufnahmeplatz 36 und die Zugehörige Ausleseeinrichtung 40 im gleichen Gehäuse anzuordnen; die Zusammenfassung der beiden Aufnahmeplätze erweist sich jedoch als bedienungstechnisch besonders vorteilhaft.

## Patentansprüche

1. Zahnärztliche Einrichtung mit einem Erkennungssystem für ein zahnärztliches Werkzeug (8), welches aus einer Reihe von vielen, vorzugsweise in Ablageplätzen (14) gehaltenen und dort entnehmbaren Werkzeugen (8', 8'' ..) in ein Behandlungsinstrument (9, 10) einsetzbar und von einem Antriebsmotor (2) antreibbar ist, und mit einer Steuereinrichtung (24) für den Antriebsmotor (2), wobei das Werkzeug (8, 8', 8'' ..) mit Codierungsmitteln (21, 30) versehen ist, welche verschiedenen Drehzahlen oder Drehzahlabstufungen entsprechen, wobei dem Werkzeug eine Ausleseeinrichtung (22, 32) zugeordnet ist, welche auf die Codierungsmittel (21, 30) abgestimmt ist und entsprechend der auf dem Werkzeug vorhandenen Codierung Kennsignale (0/1) abgibt, und wobei mit der Ausleseeinrichtung (22, 32) eine Auswertelogik (23) verbunden ist, welche die Kennsignale in Anzeigesignale und/ in Steuersignale für den das Werkzeug antreibenden Antriebsmotor (2) umsetzt, wobei die Anzeigesignale Informationen liefern über die dem Werkzeug zugeordneten Drehzahlen des Antriebsmotors (2) oder über die Drehzahlen und auf den Antriebsmotor aufzusetzende, das Werkzeug aufnehmende Behandlungsköpfe (9, 10) und über eine eine zwischen Antriebsmotor und einem Behandlungskopf vorzusehende Getriebeabstufung (G1 bis G7) und wobei mit den Steuersignalen der Antriebsmotor (2) mit der dem Werkzeug zugeordneten Drehzahl bzw, innerhalb eines dem Werkzeug zugeordneten Drehzahlbereiches betrieben wird.

2. Einrichtung nach Anspruch 1, **dadurch gekennzeichnet,** daß bei Behandlungsinstrumenten, die sich aus mehreren, axial aneinanderkuppelbaren Teilen (5 bis 7; 9, 10) mit jeweils eigenem Getriebe zusammensetzen, die Auswertelogik (23) so ausgebildet ist, daß sie anhand der Kennsignale (0/1) die für das gewählte Werkzeug (8) passende Instrumentenkombination ermittelt.

3. Einrichtung nach Anspruch 1, **dadurch gekennzeichnet,** daß Mittel vorhanden sind, welche die Kennsignale (0/1) in optische Anzeigesignale umsetzen und einer Anzeigeeinrichtung (17) zuführen.

4. Einrichtung nach Anspruch 1, **dadurch gekennzeichnet,** daß Mittel vorhanden sind, welche die Kennsignale (0/1) in akustische Anzeigesignale in Form einer Sprachausgabe umsetzen.

5. Einrichtung nach Anspruch 3, **dadurch gekennzeichnet**, daß die Anzeigeeinrichtung (17) Mittel zur Symboldarstellung (19, 20) derjenigen Behandlungsinstrumente (5 bis 7; 9, 10) enthält, die von der Auswertelogik (23) aufgrund des gewählten Werkzeuges (8) ermittelt werden.

6. Einrichtung nach Anspruch 5, **dadurch gekennzeichnet**, daß die Anzeigeeinrichtung Mittel zur Symboldarstellung eines das Werkzeug (8) aufnehmenden Behandlungskopfes (9, 10) und einer zwischen Antriebseinheit (1) und Behandlungskopf (9, 10) einsetzbaren Getriebehülse (5 bis 7) enthält.

7. Einrichtung nach Anspruch 3, **dadurch gekennzeichnet**, daß die Anzeigeeinrichtung (17) weitere Mittel zur Anzeige der Drehzahl des Antriebsmotors (2), vorzugsweise eine Anzeige in Prozent, enthält.

8. Einrichtung nach Anspruch 1, **dadurch gekennzeichnet**, daß die Codierung des Werkzeuges (8) nach dem Binär-Codesystem (0/1) aufgebaut ist.

9. Einrichtung nach Anspruch 8, **dadurch gekennzeichnet**, daß die Ausleseeinrichtung (22) mehrere Sensorelemente (25), vorzugsweise vier, enthält, und der Werkzeugdrehzahlbereich (400 bis 160.000 upm) in mehrere Drehzahlstufen (600, 800, 1000...) unterteilt ist, von denen jede Stufe einer Codierung nach dem Binär-Codesystem entspricht.

10. Einrichtung nach Anspruch 9, **dadurch gekennzeichnet**, daß die Drehzahlstufen in jeweils gleiche Anzahl von Codierungsmittel (21) enthaltene Gruppen (I bis IV) unterteilt sind.

11. Einrichtung nach Anspruch 8, **dadurch gekennzeichnet**, daß das Werkzeug (8) mehrere Codierungsmittel (21, 30), die Ausleseeinrichtung (32) dagegen nur ein einziges Sensorelement (34) enthält, welches so angeordnet ist, daß die Kennsignale (0/1) beim Einsetzen des Werkzeuges in die das Sensorelement (33) enthaltenen Werkzeugaufnahme (33) seriell ausgelesen werden.

12. Einrichtung nach Anspruch 1, **dadurch gekennzeichnet**, daß die Codierungsmittel auf das Werkzeug (8) aufgebrachte Strichmarkierungen (21, 30) sind.

13. Einrichtung nach Anspruch 12, **dadurch gekennzeichnet,** daß die Strichmarkierungen (21) quer zur Rotationsachse des Werkzeuges (8) auf dessen Schaff (8a) angeordnet sind.

14. Einrichtung nach Anspruch 13, **dadurch gekennzeichnet**, daß die Strichmarkierungen (21) Ringe sind.

15. Einrichtung nach Anspruch 1, **dadurch gekennzeichnet**, daß die Strichmarkierungen (30) längs zur Werkzeugachse angeordnet sind.

16. Einrichtung nach Anspruch 15, **dadurch gekennzeichnet**, daß die Strichmarkierungen (30) auf dem Werkzeugschaft (8a) so angeordnet sind, daß sie bei im Behandlungsinstrument eingesetzten Zustand aus dem Kopfgehäuse (31) vorstehen, und daß das Sensorelement (34) in der Werkzeugaufnahme (33) so angeordnet ist, daß die Informationen aus den Strichmarkierungen beim Aufsetzen des Behandlungsinstruments (9, 10) auf die Werkzeugaufnahme erfaßt werden.

17. Einrichtung nach Anspruch 16, **dadurch gekennzeichnet**, daß ein definierter Anschlag (35) für die Zuordnung von Strichmarkierungen (21, 30) und Sensorelement(e) (25, 34) vorhanden ist.

18. Einrichtung nach Anspruch 12, **dadurch gekennzeichnet**, daß die Strichmarkierungen (21, 30) durch Laserstrahlen aufgebracht sind.

19. Einrichtung nach Anspruch 1, **dadurch gekennzeichnet**, daß die Ausleseeinrichtung (22, 32) optoelektronische Sensoren (25, 34) in Form von fokussierten Reflexlichtschranken enthält.

20. Einrichtung nach Anspruch 1, **dadurch gekennzeichnet**, daß an dem das Werkzeug (8) aufnehmenden rotierenden Teil (Hohlwelle 50, Spannzange) des Behandlungsinstruments (1) zweite Codierungsmittel (40, 51 bis 55) vorgesehen sind, daß eine für diese zweiten Codierungsmittel geeignete zweite Ausleseeinrichtung (41, 56) mit Auswertelogik (43) vorhanden ist, daß ein Vergleichsglied (48) vorhanden ist, welches einerseits mit der Auswertelogik (43) der zweiten Ausleseeinrichtung und andererseits mit der Auswertelogik (23) der ersten Ausleseeinrichtung verbunden ist, und welches bei eingeschaltetem Antriebsmotor (2) einen Soll-/Istwertvergleich der beiden Kennsignale durchführt, wobei der Istwert bei Erreichen des durch die Kennsignale der ersten Codierungsmittel vorgegebenen Sollwertes ein Maß für die Einstellung bzw. Begrenzung der Motordrehzahl im Behandlungsinstrument (1) darstellt.

21. Einrichtung nach Anspruch 20, **dadurch gekennzeichnet**, daß ein vorzugsweise im Gehäuse (15) des Werkzeug-Aufnahmeplatzes (13) integriert angeordneter Behandlungskopf-Aufnahmeplatz (36) vorgesehen ist, der eine auf magnetische (40) oder optische (51 bis 55) Codierungsmittel ansprechende Ausleseeinrichtung (41, 56) enthält.

22. Einrichtung nach Anspruch 21, **dadurch gekennzeichnet**, daß als Codierungsmittel ein quermagnetisierter Stift (39) oder eine quermagnetisierte Hohlwelle (50) vorgesehen sind.

23. Einrichtung nach Anspruch 21, **dadurch gekennzeichnet**, daß an der Stirnseite der Hohlwelle (50) ein oder mehrere, bei mehreren vorzugsweise asymmetrisch angeordnete Markierungen (51 bis 55) vorgesehen sind.

## Claims

1. A dental device with a recognition system for a dental tool (8), which is able to be inserted from a series of many tools (8', 8''), preferably held in and removable from depositing places (14), into a treatment instrument (9, 10) and able to be driven by a driving motor (2), and with a control device (24) for the driving motor (2), wherein the tool (8, 8', 8'') is provided with coding means (21,30), which correspond to various numbers of revolutions or stages of numbers of revolutions, wherein the tool is assigned a read-out device (22,32), which is synchronized to the coding means (21,30), and delivers characteristic signals (0/1) corresponding with the coding present on the tool and wherein connected to the read-out drive (22,32) there is an evaluating logic means (23), which converts the characteristic signals into indicator signals and into control signals for the driving motor (2) driving the tool, wherein the indicator signals deliver information about the numbers of revolutions of the driving motor (2) assigned to the tool or about the number of revolutions and treatment heads (9, 10) accommodating the tool and to be placed on the driving motor, and about a gearing stage (G1 to G7) to be provided between the driving motor and a treatment head, and wherein with the control signals the driving motor (2) is driven with the number of revolutions assigned to the tool, or within a range of number of revolutions assigned to the tool.

2. A device according to claim 1, characterised in that in the treatment instruments, which are composed of several parts (5 to 7;9,10) able to be coupled together axially, with in each case its own gearing, the evaluating logic means (23) is formed such that with the aid of the characteristic signals (0/1) it determines the instrument combination suitable for the selected tool (8).

3. A device according to claim 1, characterised in that means are provided which convert the characteristic signals (0/1) into optical indicator signals and supply these to an indicator device (17).

4. A device according to claim 1, characterised in that means are provided which convert the characteristic signals (0/1) into acoustic indicator signals in the form of a speech output.

5. A device according to claim 3, characterised in that the indicator device (17) contains means for symbol representation (19,20) of the treatment instruments (5 to 7; 9,10), which are determined by the evaluating logic means (23) on the basis of the selected tool (8).

6. A device according to claim 5, characterised in that the indicator device contains means for symbol representation of a treatment head (9,10) accommodating the tool (8) and a gear sleeve (5 to 7) able to be inserted between the drive unit (1) and the treatment head (9,10).

7. A device according to claim 3, characterised in that the indicator device (17) contains further means for indicating the number of revolutions of the driving motor (2), preferably an indication in percentage.

8. A device according to claim 1, characterised in that the coding of the tool (8) is built up according to the binary code system (0/1).

9. A device according to claim 8, characterised in that the read-out device (22) contains several sensor elements (25), preferably four, and the range of the number of revolutions of the tool (400 to 160,000 rpm) is divided into several stages of numbers of revolutions (600, 800, 1000...) each stage of which corresponds to a coding according to the binary code system.

10. A device according to claim 9, characterised in that the stages of the number of revolutions are divided in each case into the same number of groups (I to IV) containing coding means (21).

11. A device according to claim 8, characterised in that the tool (8) contains several coding means (21,30), the read-out device (32), on the other hand, contains only a single sensor element (34), which is arranged such that the characteristic signals (0/1) are read out when inserting the tool into the tool holder (33) containing the sensor element (33).

12. A device according to claim 1, characterised in that the coding means are bar codes (21,30) placed on the tool (8).

13. A device according to claim 12, characterised in that the bar codes (21) are arranged transverse to the axis of rotation of the tool (8) on the shaft thereof (8a).

14. A device according to claim 13, characterised in that the bar codes (21) are rings.

15. A device according to claim 12, characterised in that the bar codes (30) are arranged along the tool axis.

16. A device according to claim 15, characterised in that the bar codes (30) are arranged on the tool shaft (8a) so that they project from the head housing (31) when inserted in the treatment instrument, and in that the sensor element (34) is arranged in the tool holder (33) so that the information is detected from the bar codes when placing the treatment instrument (9,10) on the tool holder.

17. A device according to claim 16, characterised in that a defined stop (35) is provided for the allocation of bar codes (21,30) and sensor element(s) (25,34).

18. A device according to claim 12, characterised in that the bar codes (21,30) are applied through laser beams.

19. A device according to claim 1, characterised in that the read-out device (22,32) contains opto-electronic sensors (25,34) in the form of focused reflex light barriers.

20. A device according to claim 1, characterised in that on the rotating part (hollow shaft 50, clamping tools) of the treatment instrument (1), accommodating the tool (8), second coding means (40,51 to 55) are provided, such that a second read-out device (41, 56) suitable for these second coding means is provided with the evaluating logic means, such that a comparison element (48) is provided, which is connected, on the one hand, to the evaluating logic means (43) of the second read-out device and, on the other hand, is connected to the evaluating logic means (23) of the first read-out device and which, when the driving motor (2) is connected, carries out a desired/actual value comparison of both characteristic signals, wherein the actual value, when achieving the desired value predetermined by the characteristic signals of the first coding means, represents a gauge for the adjustment or limitation of the number of revolutions of the motor in the treatment instrument (1).

21. A device according to claim 20, characterised in that a treatment head holding space (13) is provided, preferably arranged integrated in the housing (15) of the tool holding space (13), which contains a read-out device responding to the magnetic (40) or optical (51 to 55) coding means.

22. A device according to claim 21, characterised in that a transversely magnetised pin (39) or a transversely magnetised hollow shaft (50) are provided as coding means.

23. A device according to claim 21, characterised in that on the front side of the hollow shaft (50) there are provided one or more marks (51 to 55), preferably arranged asymmetrically when there are several.

## Revendications

1. Appareil de dentisterie comportant un système d'identification d'un outil de dentisterie (8), qui peut être introduit dans un instrument de traitement (9,10) à partir d'un grand nombre d'outils (8',8''...), qui sont retenus de préférence en des emplacements de rangement (14) et peuvent en être retirés, et qui peut être entraîné par un moteur d'entraînement (2), et un dispositif de commande (21) pour le moteur d'entraînement (2), l'outil (8,8',8''...) comportant des moyens de codage (21,30), qui correspondent à différentes vitesses de rotation ou échelons de vitesses de rotation, il est associé à l'outil un dispositif de lecture (22,32), qui est réglé sur les moyens de codage (21,30) et délivre des signaux caractéristiques (0/1) en fonction du codage présent sur l'outil, et au dispositif de lecture (22,32) est raccordée une unité logique d'exploitation (23), qui convertit les signaux caractéristiques en des signaux indicateurs et en des signaux de commande pour le moteur d'entraînement (2) qui entraîne l'outil, les signaux indicateurs fournissant des informations concernant les vitesses de rotation du moteur d'entraînement (2), associées à l'outil, ou concernant celles-ci et les têtes de traitement (9,10), qui peuvent être montées sur le moteur d'entraînement et reçoivent l'outil, et concernant un étage de transmission (G1 à G7) qui doit être prévu entre le moteur d'entraînement et une tête de traitement, le moteur d'entraînement (2) pouvant être commandé, par les signaux de commande, de manière à tourner avec la vitesse de rotation associée à l'outil ou dans une plage de vitesses de rotation associée à l'outil.

2. Dispositif suivant la revendication 1, caractérisé par le fait que dans le cas d'instruments de traitement qui sont formés par plusieurs éléments (5 à 7; 9, 10) pouvant être accouplés axialement et comportant chacun une transmission propre, l'unité logique d'exploitation (23) est agencée de manière à déterminer la combinaison d'instruments, qui est adaptée à l'outil choisi (8), sur la base des signaux caractéristiques (0/1).

3. Dispositif selon la revendication 1, caractérisé par le fait qu'il est prévu des moyens qui convertissent les signaux caractéristiques (0/1) en des signaux indicateurs optiques et les envoient à un dispositif indicateur (17).

4. Dispositif suivant la revendication 1, caractérisé par le fait qu'il est prévu des moyens qui convertissent les signaux caractéristiques (0/1) en signaux acoustiques d'affichage sous une forme parée.

5. Dispositif suivant la revendication 3, caractérisé par le fait que le dispositif indicateur (17) contient des moyens pour la représentation de symboles (19,20) des instruments de traitement (5 à 7; 9,10), qui sont déterminés par l'unité logique d'exploitation (23) sur la base de l'outil (8) choisi.

6. Dispositif suivant la revendication 5, caractérisé par le fait que le dispositif indicateur contient des moyens pour représenter les symboles d'une tête de traitement (9,10) qui reçoit l'outil (8), et d'une douille de transmission (5 à 7) qui peut être insérée entre l'unité d'entraînement (1) et la tête de traitement (9,10).

7. Dispositif suivant la revendication 3, caractérisé par le fait que le dispositif indicateur (17) contient d'autres moyens pour afficher la vitesse de rotation du moteur d'entraînement (2), de préférence d'un affichage en pourcentage.

8. Dispositif suivant la revendication 1, caractérisé par le fait que le codage de l'outil (8) est réalisé selon le système codé binaire (0/1).

9. Dispositif suivant la revendication 8, caractérisé par le fait que le dispositif de lecture (22) contient plusieurs, de préférence quatre, éléments formant capteurs (25) et que la plage des vitesses de rotation de l'outil (400 à 160 000 tr/mn) est subdivisée en plusieurs échelons de vitesses de rotation (600, 800, 1000...), dont chacun correspond à un codage selon le système codé binaire.

10. Dispositif suivant la revendication 9, caractérisé par le fait que les échelons de vitesses de rotation sont répartis dans des groupes I à IV contenant respectivement le même nombre de moyens de codage (21).

11. Dispositif suivant la revendication 8, caractérisé par le fait que l'outil (8) contient plusieurs moyens de codage (21,30), tandis que le dispositif de lecture (32) contient uniquement un seul élément formant capteur (34) disposé de manière que les signaux caractéristiques (0/1) sont lus en série lors de l'utilisation de l'outil, dans le logement (33) prévu pour l'outil et contenant l'élément formant capteur (33).

12. Dispositif suivant la revendication 1, caractérisé par le fait que les moyens de codage sont des marques en forme de traits (25,30) disposées sur l'outil (8).

13. Dispositif suivant la revendication 12, caractérisé par le fait que les marques en forme de traits (21) sont disposées transversalement à l'axe de rotation de l'outil (8), sur l'arbre (8a) de ce dernier.

14. Dispositif suivant la revendication 13, caractérisé par le fait que les marques en forme de traits (21) sont des anneaux.

15. Dispositif suivant la revendication 1, caractérisé par le fait que les marques en forme de traits (30) sont disposées le long de l'axe de l'outil.

16. Dispositif suivant la revendication 15, caractérisé par le fait que les marques en forme de traits (3) sont disposées sur l'arbre (8a) de l'outil de sorte qu'ils font saillie hors du boîtier (31) de la tête, lorsqu'ils sont insérés dans l'instrument de traitement, et que l'élément formant capteur (34) est disposé dans le logement (33) pour l'outil de sorte que les informations fournies par les marques en forme de traits sont détectées lors de la mise en place de l'instrument de traitement (9,10) sur le logement de l'outil.

17. Dispositif suivant la revendication 16, caractérisé par le fait qu'une butée définie (35) est prévue pour l'association de marques en forme de traits (21,30) et d'un ou d'éléments formant capteurs (25,34).

18. Dispositif suivant la revendication 12, caractérisé par le fait que les marques en forme de traits (21,30) sont formées au moyen de faisceaux laser.

19. Dispositif suivant la revendication 1, caractérisé par le fait que le dispositif de lecture (22,32) contient des capteurs optoélectroniques (25,34) réalisés sous la forme de relais photoélectriques réflexes focalisés.

20. Dispositif suivant la revendication 1, caractérisé par le fait qu'il est prévu deux moyens de codage (51 à 55) sur la partie rotative (arbre 20, pince de serrage), qui loge l'outil (8), de l'instrument de traitement (1), qu'il est prévu un second dispositif de lecture (41,56), convenant pour ce second moyen de codage comportant une unité logique d'exploitation (43), qu'il est prévu un circuit comparateur (48), qui est raccordé d'une part à l'unité logique d'exploitation (43) du second dispositif de lecture et d'autre part à l'unité logique d'exploitation (23) du premier dispositif de lecture et qui, lorsque le moteur d'entraînement (2) est branché, exécute une comparaison valeur de consigne/valeur réelle des deux signaux caractéristiques, la valeur réelle représentant, lorsque la valeur de consigne prédéterminée par les signaux caractéristiques des premiers moyens de codage est atteinte, une mesure du réglage ou de la limitation de la vitesse de rotation du moteur dans l'instrument de traitement (1).

21. Dispositif suivant la revendication 20, caractérisé par le fait qu'il est prévu un emplacement (36) de réception de la tête de traitement, qui est ménagé d'une manière intégrée de préférence dans le boîtier (15) de l'emplacement (13) de réception de l'outil et qui contient un dispositif de lecture (41,56) qui répond à des moyens de codage magnétiques (40) ou optiques (51 à 55).

22. Dispositif suivant la revendication 21, caractérisé par le fait qu'il est prévu, comme moyens de codage, une tige (39) aimantée transversalement ou un arbre creux (50) aimanté transversalement.

23. Dispositif suivant la revendication 21, caractérisé par le fait qu'une ou plusieurs marques (51 à 55) sur la face frontale de l'arbre creux (50), avec une disposition dissymétrique dans le cas où plusieurs marques sont prévues.
